# EUROPEAN PATENT SPECIFICATION

(11) **EP 2 441 813 B1**
(45) Date of publication and mention of the grant of the patent: **03.04.2013**
(21) Application number: 10187787.6
(22) Date of filing: 15.10.2010
(51) Int. Cl.: C09J 7/04, D03D 13/00, D03D 15/00

(54) **High abrasion resistance tape**
Band mit hoher Abriebbeständigkeit
Bande à forte résistance à l'abrasion

(43) Date of publication of application: 18.04.2012
(73) Proprietor: PLASTO, 21300 Chenove (FR)
(72) Inventor: Durand, Hervé, 21000 Dijon (FR); Masuyer, Pascal, 39120 Chaussin (FR)
(74) Representative: Thivillier, Patrick

(56) References cited:
- EP-A1- 1 607 459
- EP-A1- 2 000 516
- EP-A1- 2 045 303
- DATABASE WPI Week 198614 Thomson Scientific, London, GB; AN 1986-091269 XP002629007, -& JP 61 037853 A (SHINKO KAGAKU KOGYO KK) 22 February 1986 (1986-02-22)
- DATABASE WPI Week 199214 Thomson Scientific, London, GB; AN 1992-110771 XP002629008, -& JP 4 053890 A (SHINKO KAGAKU KOGYO KK) 21 February 1992 (1992-02-21)

## Description

### FIELD OF THE INVENTION

The invention relates to an abrasion resistant adhesive tape, in particular for sheathing elongate material such as more particularly lead or cable looms, comprising at least a strip type substrate, at least one self sticking adhesive layer consisting of a pressure sensitive adhesive on at least one side of said substrate and, accessorily, a covering extending in the longitudinal direction of the adhesive tape and covering partially or totally said adhesive layer. The abrasion resistant tape according to the invention will find wide application and is more particularly intended to protect vehicle leads from mechanical effects and rubbing on sharp edges, burrs or weld spots.

### DESCRIPTION OF PRIOR ART

It is well known that, in automobile industry, the number of electric leads and cable looms increased last years with multiplicity of new electronic equipments, such as sound, navigation, communication, and security equipment, in motor vehicles. In this way, several hundred meters of electric leads and cable looms run in different compartment of vehicles such as the roof, the trunk, under the hood, doors, etc... These electric leads and cable looms of different length are wrapped bundles, before installation or in the ready-installed state, in order to obtain protective function and/or to reduce space taken up by the bundle of leads.

Different kind of means is used to wrap bundles according to the type of protection to achieve. For a protection from ingress of fluid, film-backed adhesive tapes are used; for heat protection, airy and bulky adhesive tapes based on thick non woven or foam baking materials having insulating properties are used; and when a protective function against scuffing and rubbing is needed, abrasion resistance adhesive tapes are used.

In order to protect vehicle leads from mechanical effects and rubbing on sharp-edged bodywork components, the systems nowadays used also include braided hoses made from polyamide, polyester and polyethylene engineering materials. Effective protection from abrasion is achieved in such products through the use of monofilament yarns.

A disadvantage of such yarns is the particularly high stiffness, owing to the comparatively large diameter of each individual filament.

To allow the production of sufficiently flexible products for use in vehicle construction, therefore, it is necessary to choose an open braided construction, which allows the yarns to shift.

Owing to the open braiding, this kind of fabric cannot be used for coating with an adhesive in order to produce adhesive tapes, since in the coating operation the adhesive would run through the holes.

For flexible woven fabrics, which are typically the backing material for tapes, multifilament yarns are employed. The high flexibility of the fabrics is achieved through the use of yarns having a large number of single filaments.

It is the case, for example, of DE 20 2006 015 701 U that discloses a cable wrap tape, intended more particularly for the engine compartment of a car, having a tape-like backing which is composed of woven fabric and which is provided on at least one side with a self-adhesive layer composed of a pressure-sensitive adhesive.

The woven fabric of the backing is composed of a yarn formed from an engineering-grade polyamide material, with a linear density of at least 280 dtex, the yarn being formed from 24 to 80 filaments, and the cable wrap tape meeting LV 312 abrasion class E on a 10 mm diameter mandrel.

It should be noted that the abrasion resistance is a measure of the scuff resistance of adhesive tapes. An established method of determining the abrasion resistance of protective systems in the vehicle's electrics is the International Standard ISO 6722, Section 9.3 "Scrape abrasion test" (April 2006 edition). Based on the ISO 6722 standard, the scrape abrasion resistance of adhesive tapes is tested in accordance with the German Standard LV 312. The test specimen, with a length of approximately 10 cm, is adhered longitudinally in a single ply to a steel mandrel 10 mm thick. The abrading tool used is a steel wire of 0.45 mm diameter which rubs the test specimen centrally under a weight loading of 7 N. The numerical measure determined for the abrasion properties is the number of back-and-forth strokes taken to destroy the test specimen.

According to the International Standard ISO 6722, the German Standard LV 312 and the specifications document of the French company PSA (STE 9645871099 - index F) Peugeot-Citroën, the following criteria are applied :

| | |
|---|---|
| **Steel wire diameter** | 0.45 mm |
| **Movement amplitude** | 20 ± 1 |
| **Frequency** | 55 ± 5 cycles / min |
| **Weight loading** | 700 g (7N) |
| **Steel mandrel diameter** | 10 mm |
| **Test area onto the mandrel** | To be done only onto one thickness of the tape |

The result of the test is termed the abrasion class of the test specimen, with the mandrel diameter and weight loading being specified. Adhesive tapes are classified into classes A to F as per the following table.

| | **Number of cycles** | **Abrasion class - ISO 6722** | **Abrasion class - LV312** |
|---|---|---|---|
| **No abrasion protection** | < 100 cycles | **Class X** | **A** |
| **Low or moderate abrasion protection** | 100 - 499 cycles | **Class 1** | **B** |
| | 500 -999 cycles | | **C** |
| **High abrasion protection** | 1 000 - 4 999 cycles | **Class 2** | **D** |
| **Very high abrasion protection** | 5 000 - 14 999 cycles | **Class 3** | **E** |
| **Extremely high abrasion protection** | ≥ 15 000 cycles | **Class 4** | **F** |

However, it is not possible to produce a high level of abrasion protection through the use of a large number of single filaments. Furthermore, this kind of abrasion resistance adhesive tape is relatively expensive.

Moreover, the US patent application US 2010/0048074 also discloses a highly abrasion-resistant tape, preferably for sheathing elongate material such as more particularly leads or cable looms, having a woven fabric backing, wherein the woven fabric is composed of a plastics material, the yarns used to form the fabric have a linear density of 280 to 1100 dtex, and each yarn is constructed from at least 90 single filaments. Preferably, the yarns of the plastics material of the woven fabric are nylon 6, nylon 6,6, nylon 6,6 heat-stabilized, polyether ketones (PEEK) or polyphenylene sulphides (PPS).

Nevertheless, this kind of abrasion resistance adhesive tape wherein the woven fabric backing is composed of multifilament yarns is relatively expensive.

We also know the Japanese patent application JP 61037853 that discloses a pressure-sensitive adhesive tape which can be easily unwound and has strong adhesion to an adherend, by providing a layer of a pressure-sensitive adhesive on the smoother surface of a satin fabric which has a difference in the degree of smoothness between the top and bottom surfaces and which has not been treated with any varnish. A satin fabric having a texture wherein a warp is finer than a weft and the thread count of the former is greater than that of the latter. Because of this construction, the top surface which has an appearance as if long fine warps are present in relief on the fabric surface has a smoother surface whereas the bottom surface has a rough surface of lower degree of smoothness. The warp and weft are made of glass fibers, polyamide fibers, polyester fibers, etc. A layer of an adhesive is provided on the surface of the satin fabric of such a construction without treating with any varnish. This layer is usually made of a silicone adhesive having good heat resistance, but other adhesives may also be used depending upon the requisites, such as heat resistance, of the tape.

It should be noted that the fabric has a satin aspect on its top surface which has an appearance as if long fine warps are present in relief on the fabric surface in such a manner that its top surface has a smoother surface and the bottom surface has a rough surface of lower degree of smoothness resulting from finest dimensions of warps.

This kind of adhesive tape presents the drawback to be quite expensive and to not provide a sufficient abrasion resistance.

To overcome above-mentioned limitation, a need exists for a cheaper tape which affords the possibility of bandaging individual leads to form cable looms with high protection against mechanical damage due to scuffing and rubbing on sharp edges, burrs or weld spots.

### SUMMARY OF THE INVENTION

It is therefore an object of the invention to provide an abrasion resistance adhesive tape having a moderate cost and which affords the possibility of bandaging individual leads to form cable looms with high protection against mechanical damage due to scuffing and rubbing on sharp edges, burrs or weld spots.

For this purpose, it is proposed an abrasion resistant adhesive tape, in particular for sheathing elongate material such as more particularly lead or cable looms, comprising at least a strip type substrate, at least one self sticking adhesive layer consisting of a pressure sensitive adhesive on at least one side of said substrate and, accessorily, a covering extending in the longitudinal direction of the adhesive tape and covering partially or totally said adhesive layer, wherein the strip type substrate consists in a satin fabric having a repeat greater than 2 and a step number greater than or equal to 1, said satin fabric comprising warp and weft threads made from synthetic spun yarns.

Preferably, the strip type substrate consists in a regular satin fabric.

Said strip type substrate is preferably a satin weave fabric 4:1, i.e a satin fabric having a repeat number of 5 and a step number of 2 on the right side of the fabric and a step number of 3 on the wrong side of the fabric.

According to a preferred embodiment, the adhesive layer is coating the right side of the satin fabric having a smooth texture.

Said satin fabric is made from polyester spun yarns which are particularly inexpensive.

Moreover, the satin fabric has a basis weight of 210 to 380 g/m², preferably 290 to 320 g/m².

The thickness of the tape is greater than 0.4mm, and preferably in the range from 0.5 and 0.7 mm.

Synthetic spun yarns forming warp and weft threads of the satin fabric has a mass per unit lenght of yarn of more than 250 dtex (less than Nm 40/1)..

Preferably, synthetic spun yarns forming warp and weft threads of the satin fabric has a mass per unit length of yarn of 500dtex (Nm 20/1, i.e. 450 derniers spun yarn)..

The number of warp threads in the satin fabric of the strip type substrate lies in the range from 35 to 60 per cm, preferably 40 per cm.

The number of weft threads in the satin fabric of the strip type substrate lies in the range from 10 to 25 per cm, preferably 16 to 19 per cm.

The adhesive layer is an alkyl acrylate in copolymer form layer.

Preferably, the adhesive layer is coating the right side of the satin fabric having a smooth texture.

Alternatively, the adhesive layer is coating the wrong side of the satin fabric having a rough surface of lower degree of smoothness than the right side.

### BRIEF DESCRIPTION OF THE DRAWINGS

For a further understanding of the objects and advantages of the present invention, references should be made to the following drawings in conjunction with the accompanying descriptions and operations, wherein:
Figure 1 is a perspective view of an abrasion resistance adhesive tape according to the invention,
Figure 2 is a longitudinal cross section view along axis II-II' of the abrasion resistance adhesive tape according to the invention represented on figure 1,
   mass per unit lenght of yarn of more than 250 dtex (less than Nm 40/1)
   mass per unit lenght of yarn of 500 dtex (Nm 40/1, i.e. 450 deniers spun yarn)
Figure 3 is a transverse cross section view along axis III-III' of the abrasion resistance adhesive tape according to the invention represented on figure 1,
Figure 4 is a top view of the substrate of the abrasion resistance adhesive tape according to the invention,
Figure 5 is a bottom view of the substrate of the abrasion resistance adhesive tape according to the invention,
Figure 6 is a longitudinal cross section view along axis VI-VI' of the substrate of the abrasion resistance adhesive tape according to the invention represented on figure 5,
Figure 7 is a transverse cross section view along axis VII-VII' of the substrate of the abrasion resistance adhesive tape according to the invention represented on figure 5.

### DETAILED DESCRIPTION

It is emphasized that, in accordance with the standard practice in the industry, various features are not drawn to scale. In fact, the dimensions of the various features may be arbitrarily increased or reduced for clarity of discussion.

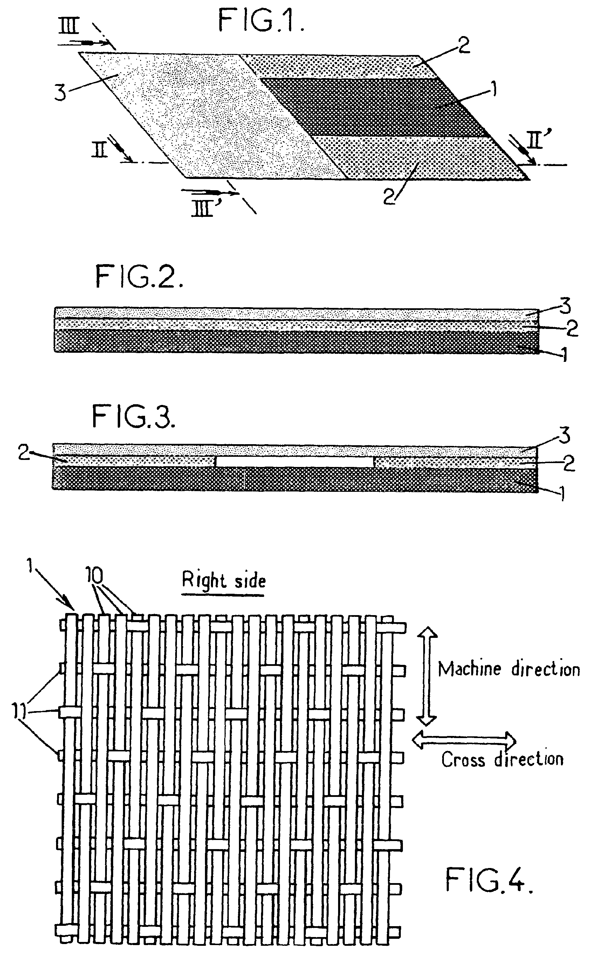

Referring to figures 1 to 3, the abrasion resistant adhesive tape according to the invention, in particular for sheathing elongate material such as more particularly lead or cable looms, comprises a strip type substrate 1, one self sticking adhesive layer 2 consisting of a pressure sensitive adhesive on one side of said substrate 1 and, accessorily, a covering 3 extending in the longitudinal direction of the adhesive tape and covering totally said adhesive layer 2 and said strip type substrate 1.

In this particular embodiment, the sticking adhesive layer 2 is a longitudinal sticking adhesive strip covering only partially the top surface of the strip type substrate 1 ; nevertheless, it is obvious that the sticking adhesive layer 2 can cover totally or partially the top and/or the bottom surface of the strip type substrate 1 without departing from the scope of the invention.

The adhesive layer 2 may be applied in the form of two parallel stripes in extending on each side of the longitudinal direction of the strip type substrate 1, the width of each stripe being lower than that half of the backing of the substrate 1. Depending on the particular utility, it is also possible for the backing material to be coated with two or more parallel strips of the adhesive.

The position of the stripes on the substrate 1 is freely selectable and an arrangement directly at the median part of the substrate 1.

When the adhesive tape is used to wrap a cable loom, by the adhesive tape being led in a helicoidal movement around the cable loom, the sheathing of the cable loom can be accomplished by bonding the adhesive of the adhesive tape only to the susbtrate itself, with the material not coming into contact with any adhesive. If a certain degree of fixing of the adhesive tape on the material is desired, then wrapping can be accomplished by bonding part of the adhesive stripe to the substrate 1 itself, and another part to the material.

The adhesive layer 2 is preferably an alkyl acrylate in copolymer form layer. A suitable adhesive is one based on acrylate hotmelt with a K value of at least 20, more particularly greater than 30 (measured respectively in 1% strength by weight solution in toluene, 25[deg.] C.), obtainable by concentrating a solution of such an adhesive to form a system which can be processed as a hotmelt.

One adhesive found to be particularly suitable is a low molecular mass acrylate hotmelt PSA of the kind carried under the name acResin UV or Acronal(R), especially acResin 258UV, by BASF. This low-K-value adhesive acquires its application-compatible properties by virtue of a concluding, radiation-chemically initiated crosslinking.

The covering 3 consists, for example, in a kraft paper coated on one face with a polyethylene layer and on the opposite face with a silicon layer, said kraft paper having a surface weight of 85g/m² or in any suitable paper well known by the man skilled in the art. Such covering 3 can consist in a kraft paper marketed by the company GASCOGNE LAMINATES under the reference Relkote (trademark) 3644.

Suitable materials for the covering include the customary films in particular for cable bandaging applications, based on polyolefins (for example polyethylene films, polypropylene films, monoaxially or biaxially oriented polypropylene films), polyester films, PA films, and other films or PVC, preferably those having plasticizer contents of between 20 and 60 phr.

The strip type substrate 1 consists in a satin fabric having a repeat greater than 2 and a step number greater than or equal to 1, said satin fabric comprising warp and weft threads made from synthetic spun yarns. Said satin fabric has a satin weave having the following basic characteristics:
(i) They are either warp or weft faced weaves.
(ii) Have no prominent weave structures
(iii) Only one binding point in each end or pick
(iv) No continuous twill lines
according to the definition of a satin weave given in the publication "FABRIC - STUCTURE AND DESIGN ; N.GOKARNESHAN (Senior lecturer - Deptt. of Textile Technology Kumaraguru College of Technology - Coimbatore 641 006) ; New age international publishers, 2004 ; (ISBN(10) : 81-224-2307-8 ; ISBN(13) : 978-81-224-2307-5)".

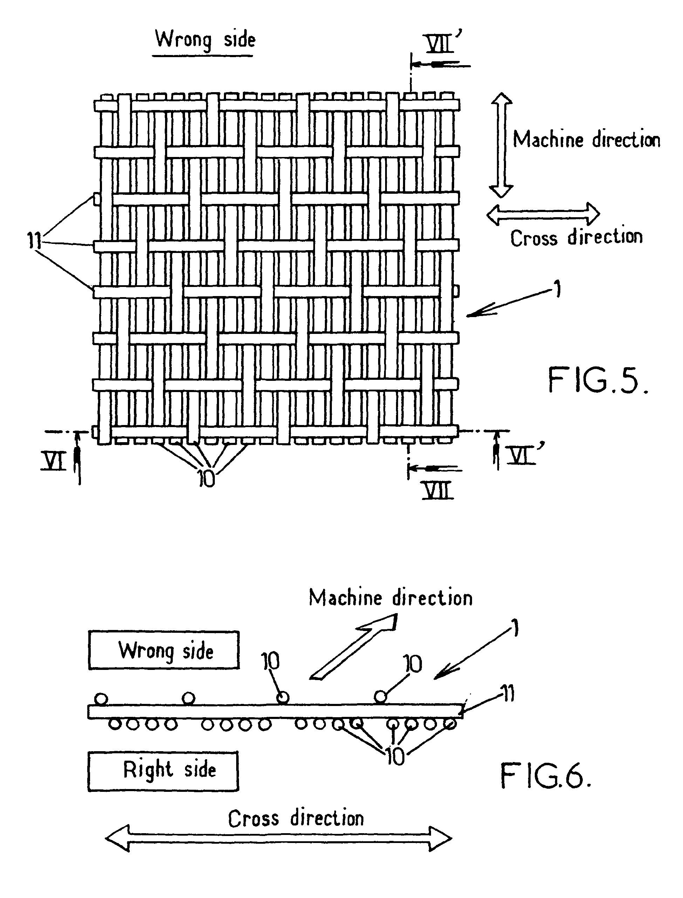

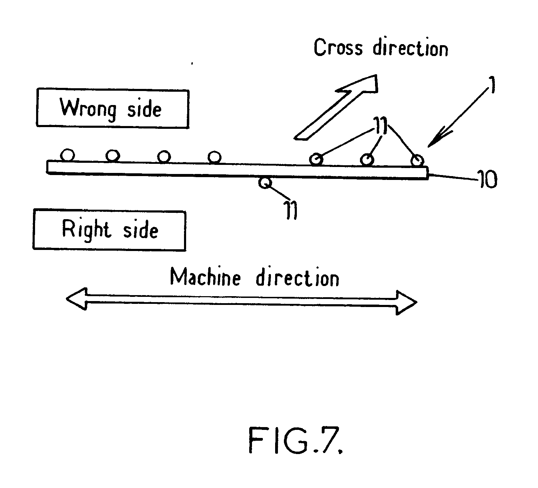

Referring to figures 4 to 7, the strip type substrate 1 is a regular satin weave fabric 4:1, i.e a satin fabric having a repeat number of 5 and a step number of 2 on the right side of the fabric (a step number of 3 on the wrong side of the fabric), wherein warp and weft threads 10 and respectively 11 are made from polyester spun yarns. Synthetic spun yarns forming warp and weft threads 10,11 of the satin fabric has a mass per unit lenght of yarn of more than 250 dtex (less than Nm 40/1) and preferably a mass per unit lenght of yarn of more than 500 dtex (less than Nm 20/1, i.e. 450 deniers) spun yarns.

It should be noted that the metric count is the count usually used for synthetic yarns and is based on the number of metres of yarn that weights one gramm. The man skilled in the art should easily convert metric count into denier and vice versa.

The number of warp threads 10 in the satin fabric of the strip type substrate 1 lies in the range from 35 to 60 per cm, preferably 40 per cm, and the number of weft threads 11 in the satin fabric of the strip type substrate 1 lies in the range from 10 to 25 per cm, preferably 16 to 19 per cm. Moreover, the satin fabric has a basis weight of 210 to 380 g/m², preferably 290 to 320 g/m² and the thickness of the abrasion resistance adhesive tape is greater than 0.4mm, and preferably in the range from 0. 5 and 0.7 mm.

In this particular embodiment, warp and weft threads have the same diameter; nevertheless, it is obvious that warp and weft threads can have different diameters.

Moreover, it is obvious for the man skilled in the art that the satin weave fabric can consists in any regular or irregular satin weave fabric.

The adhesive layer 2 is coating the right side of the satin fabric having a smooth texture and/or said adhesive layer 2 is coating the wrong side of the satin fabric having a rough surface of lower degree of smoothness than the right side.

On the basis of the outstanding configuration of the adhesive tape according to the invention, the adhesive tape attains LV312 abrasion class E on a 10 mm mandrel, and, furthermore, even achieves LV312 abrasion class F on a 10 mm mandrel, a feat of a kind that could not have been expected by the skilled person. Indeed, it is well known that spun yarns are produced in much the same way as a cotton or wool yarn is produced, i.e. long filaments are first cut into short pieces called staple which are then combined together and spun to create a yarn made up of thousands of short filaments, and do not provide a high abrasion resistance.

Surprisingly, polyester spun yarns weaved according to a satin weave provide a high abrasion resistance despite the low abrasion resistance of each yarn. For example, polyester spun yarns weaved according to a satin weave provide a higher abrasion resistance than the abrasion resistant tape disclosed in the example 5 of the US patent application US 2010/0048074, wherein the abrasion resistant tape comprises a weaving of polyester yarns with a linear density of 370 dtex and 102 filaments per yarn in plain-weave construction with a set of 27 threads/cm warp and 22 threads/cm weft leads to a basis weight of 180 g/m², said abrasion resistant abrasion tape exhibiting an LV312 abrasion class D.

Moreover, it should be noted that polyester spun yarns are cheaper than multifilament yarns usually forming the substrate of abrasion resistance adhesive tape of prior art.

The results of abrasion test of the different construction of an abrasion resistance adhesive tape according to the invention are documented in the following table.

| **Reference** | **Surfacic weight (g/m²** | **weave** | **Construction** | | | | | | **side** | **result** | **Classe** |
|---|---|---|---|---|---|---|---|---|---|---|---|
| | | | **Warp (L)** | | | **Weft (T)** | | | | | |
| | | | Threads/cm | Yarn | Nm | Threads/cm | Yarn | Nm | | | |
| **48565** | 216 | Satin 4:1 | 48 | PET, fdf | 34/1 | 18 | PET, fdf | 34/1 | **right** | **6440** | **Classe 3** |
| | | | | | | | | | **wrong** | **2730** | **Classe 2** |
| **40106** | 303 | Satin 4:1 | 40 | PET, fdf | 20/1 | 16 | PET, fdf | 34/1 | **right** | **6150** | **Classe 3** |
| | | | | | | | | | **wrong** | **4990** | **Classe 2** |
| **40663** | 311 | Satin 4:1 | 40 | PET, fdf | 20/1 | 16 | PET, fdf | 20/1 | **right** | **7400** | **Classe 3** |
| | | | | | | | | | **wrong** | **18000** | **Classe 4** |
| **40663-17** | 335 | Satin 4:1 | 40 | PET, fdf | 20/1 | 17 | PET, fdf | 20/1 | **right** | - | - |
| | | | | | | | | | **wrong** | **18500** | **Classe 4** |
| **40663-19** | 349 | Satin 4:1 | 40 | PET, fdf | 20/1 | 19 | PET, fdf | 20/1 | **right** | - | - |
| | | | | | | | | | **wrong** | **19000** | **Classe 4** |

Wherein fdf means spun yarn fibers and PET means Polyethylene Terephtalate.

It appears that the adhesive tape attains LV312 abrasion class E (class 3) on a 10 mm mandrel, and, furthermore, even achieves LV312 abrasion class F (class 4) on a 10 mm mandrel, a feat of a kind that could not have been expected by the skilled person knowing the low abrasion resistance of polyester spun yarns.

Accessorily, the strip type substrate 1 and/or the adhesive layer may additionally have been made flame retardant by any appropriate means well known by the man skilled in the art such as a flame retardant composed of ammonium polyphosphate, magnesium hydroxide and/or aluminium hydroxide, or by means of a chlorinated paraffin, where appropriate in combination with antimony trioxide. The flame retardants may also be organic bromine compounds, where necessary with synergists such as antimony trioxide, although, with a view to the absence of halogen from the adhesive tape, preference is given to using red phosphorus compounds, organic phosphorus compounds, mineral compounds or intumescent compounds such as ammonium polyphosphate, alone or in conjunction with synergists.

Moreover, the abrasion resistance adhesive tape may have weakening lines which extend over the entire width of the adhesive tape, the weakening lines being aligned at right angles to the running direction of the adhesive tape and/or disposed at regular intervals.

It is also obvious that polyester spun yarns can be substituted by any synthetic spun yarns having low or high abrasion resistance property.

## Claims

1. An abrasion resistant adhesive tape, in particular for sheathing elongate material such as more particularly lead or cable looms, comprising at least a strip type substrate (1), at least one self sticking adhesive layer (2) consisting of a pressure sensitive adhesive on at least one side of said substrate (1) and, accessorily, a covering (3) extending in the longitudinal direction of the adhesive tape and covering partially or totally said adhesive layer (2), **characterized in that** the strip type substrate (1) consists in a satin fabric having a repeat greater than 2 and a step number greater than or equal to 1, said satin fabric comprising warp (10) and weft (11) threads made from synthetic spun yarns.

2. Abrasion resistant adhesive tape according to claim 1, **characterized in that** the strip type substrate (1) consists in a regular satin fabric.

3. Abrasion resistant adhesive tape according to claim 2, **characterized in that** the strip type substrate (1) is a satin weave fabric 4:1, i.e a satin fabric having a repeat number of 5 and a step number of 2 on the right side of the fabric and a step number of 3 on the wrong side of the fabric

4. Abrasion resistant adhesive tape according to any claim 1 to 3, **characterized in that** the adhesive layer (2) is coating the right side of the satin fabric having a smooth texture.

5. Abrasion resistant adhesive tape according to any claim 1 to 3, **characterized in that** the adhesive layer (2) is coating the wrong side of the satin fabric having a rough surface of lower degree of smoothness than the right side.

6. Abrasion resistant adhesive tape according to any claim 1 to 5, **characterized in that** the satin fabric is made from polyester spun yarns.

7. Abrasion resistant adhesive tape according to claim 6, **characterized in that** the satin fabric has a basis weight of 210 to 380 g/m², preferably 290 to 320 g/m².

8. Abrasion resistant adhesive tape according to any claim 1 to 7, **characterized in that** its thickness is greater than 0.4mm, and preferably in the range from 0.5 and 0.7 mm.

9. Abrasion resistant adhesive tape according to any claim 1 to 8, **characterized in that** synthetic spun yarns (10,11) forming warp (10) and weft (11) threads of the satin fabric has a mass per unit length of yarn of more than 250 dtex (metric count less than Nm 40/1).

10. Abrasion resistant adhesive tape according to claim 9, **characterized in that** synthetic spun yarns (10,11) forming warp (10) and weft (11) threads of the satin fabric has a mass per unit length of yarn of 500 dtex (metric count of Nm 20/1, i.e. H50 deniers spun yarns).

11. Abrasion resistant adhesive tape according to any claim 1 to 10, **characterized in that** the number of warp threads (10) in the satin fabric of the strip type substrate (1) lies in the range from 35 to 60 per cm, preferably 40 per cm.

12. Abrasion resistant adhesive tape according to any claim 1 to 11, **characterized in that** the number of weft threads (11) in the satin fabric of the strip type substrate (1) lies in the range from 10 to 25 per cm, preferably 16 to 19 per cm.

13. Abrasion resistant adhesive tape according to any claim 1 to 12, **characterized in that** the adhesive layer (2) is an alkyl acrylate in copolymer form layer.

## Patentansprüche

1. Klebeband mit hoher Abriebfestigkeit, insbesondere für die Umwicklung von länglichen Elementen, insbesondere Kabel oder Kabelbündel, mit mindestens einem bandförmigen Träger (1), mindestens einer selbstklebenden Klebeschicht (2), die auf mindestens einer Seite des besagten Trägers (1) aus einem druckempfindlichen Haftklebstoff besteht, und daneben einer Beschichtung (3), die sich in der Längsrichtung des Klebebandes erstreckt und die besagte Klebeschicht (2) ganz oder teilweise überdeckt, **dadurch gekennzeichnet, dass** der bandförmige Träger (1) aus einem Satingewebe besteht, dessen Bindungsrapport > 2 und dessen Steigungszahl ≥ 1 ist, wobei das besagte Satingewebe Kettfäden (10) und Schussfäden (11) aus Synthesegam umfasst.

2. Klebeband mit hoher Abriebfestigkeit nach Anspruch 1, **dadurch gekennzeichnet, dass** der bandförmige Träger (1) aus einem regelmäßigen Satingewebe besteht.

3. Klebeband mit hoher Abriebfestigkeit nach Anspruch 2, **dadurch gekennzeichnet, dass** der bandförmige Träger (1) ein Gewebe mit einer Satinbindung 4:1 ist, d.h. ein Satingewebe mit dem Bindungsrapport 5, einer Steigungszahl 2 auf der Vorderseite des Gewebes und einer Steigungszahl 3 auf der Rückseite des Gewebes.

4. Klebeband mit hoher Abriebfestigkeit nach einem der Ansprüche 1 - 3, **dadurch gekennzeichnet, dass** die Klebeschicht (2) die Vorderseite des Satingewebes, die eine glatte Textur aufweist, überdeckt.

5. Klebeband mit hoher Abriebfestigkeit nach einem der Ansprüche 1 - 3, **dadurch gekennzeichnet, dass** die Klebeschicht (2) die Rückseite des Satingewebes, die eine raue, weniger glatte Oberfläche als die Vorderseite aufweist, überdeckt.

6. Klebeband mit hoher Abriebfestigkeit nach einem der Ansprüche 1 - 5, **dadurch gekennzeichnet, dass** das Satingewebe aus Polyestergarnen gefertigt ist.

7. Klebeband mit hoher Abriebfestigkeit nach Anspruch 6, **dadurch gekennzeichnet, dass** das Satingewebe ein Flächengewicht zwischen 210 und 380 g/m², vorzugsweise zwischen 290 und 320 g/m², besitzt.

8. Klebeband mit hoher Abriebfestigkeit nach einem der Ansprüche 1 - 7, **dadurch gekennzeichnet, dass** es eine Dicke von mehr als 0,4 mm, vorzugsweise zwischen 0,5 und 0,7 mm, aufweist.

9. Klebeband mit hoher Abriebfestigkeit nach einem der Ansprüche 1 - 8, **dadurch gekennzeichnet, dass** die Synthesegarne (10,11), aus denen die Kettfäden (10) und die Schussfäden (11) des Satingewebes bestehen, eine Masse pro Garnlänge über 250 dtex (metrische Garnnummer unter Nm 40/1) besitzen.

10. Klebeband mit hoher Abriebfestigkeit nach Anspruch 9, **dadurch gekennzeichnet, dass** die Synthesegame (10,11), aus denen die Kettfäden (10) und die Schussfäden (11) des Satingewebes bestehen, eine Masse pro Garnlänge von 500 dtex (metrische Garnnummer Nm 20/1, d.h. Garne mit 450 Denier) besitzen.

11. Klebeband mit hoher Abriebfestigkeit nach einem der Ansprüche 1 - 10, **dadurch gekennzeichnet, dass** die Anzahl der Kettfäden (10) in dem den bandförmigen Träger (1) bildenden Satingewebe zwischen 35 und 60 pro cm liegt und vorzugsweise 40 pro cm beträgt.

12. Klebeband mit hoher Abriebfestigkeit nach einem der Ansprüche 1 - 11, **dadurch gekennzeichnet, dass** die Anzahl der Schussfäden (11) in dem den bandförmigen Träger (1) bildenden Satingewebe zwischen 10 und 25 pro cm, vorzugsweise zwischen 16 und 19 pro Zentimeter, liegt.

13. Klebeband mit hoher Abriebfestigkeit nach einem der Ansprüche 1 - 12, **dadurch gekennzeichnet, dass** die Klebeschicht (2) aus einer Alkylakrylatschicht in Kopolymerform besteht.

## Revendications

1. Bande adhésive à forte résistance à l'abrasion, en particulier pour le gainage d'éléments oblongs, notamment des câbles ou des faisceaux de câbles, comprenant au moins un substrat de type ruban (1), au moins une couche de colle auto-adhésive (2) consistant en une colle auto-adhésive sensible à la pression sur au moins une face dudit substrat (1) et, accessoirement, un revêtement (3) s'étendant dans la direction longitudinale de la bande adhésive et recouvrant tout ou partie de ladite couche de colle (2), **caractérisée en ce que** le substrat de type bande (1) consiste en un tissu satin dont le rapport d'armure est supérieur à 2 et le décochement supérieur ou égal à 1, ledit tissu satin comprenant des fils de chaîne (10) et des fils de trame (11) en filé synthétique.

2. Bande adhésive à forte résistance à l'abrasion selon la revendication 1, **caractérisée en ce que** le substrat de type bande (1) consiste en un tissu satin régulier.

3. Bande adhésive à forte résistance à l'abrasion selon la revendication 2, **caractérisée en ce que** le substrat de type bande (1) est un tissu d'armature satin 4:1, c'est-à-dire un tissu satin avec un rapport d'armure de 5, un décochement de 2 sur l'endroit du tissu et un décochement de 3 sur l'envers du tissu.

4. Bande adhésive à forte résistance à l'abrasion selon l'une quelconque des revendications 1 à 3, **caractérisée en ce que** la couche adhésive (2) recouvre l'endroit du tissu satin, qui présente une texture lisse.

5. Bande adhésive à forte résistance à l'abrasion selon l'une quelconque des revendications 1 à 3, **caractérisée en ce que** la couche adhésive (2) recouvre l'envers du tissu satin, qui présente une surface rugueuse, moins lisse que l'endroit.

6. Bande adhésive à forte résistance à l'abrasion selon l'une quelconque des revendications 1 to 5, **caractérisée en ce que** le tissu satin est réalisé en filés de polyester.

7. Bande adhésive à forte résistance à l'abrasion selon la revendication 6, **caractérisée en ce que** le tissu satin a une masse surfacique comprise entre 210 et 380 g/m², de préférence entre 290 et 320 g/m².

8. Bande adhésive à forte résistance à l'abrasion selon l'une quelconque des revendications 1 à 7, **caractérisée en ce qu'**elle présente une épaisseur supérieure à 0,4 mm, de préférence comprise entre 0,5 et 0,7 mm.

9. Bande adhésive à forte résistance à l'abrasion selon l'une quelconque des revendications 1 à 8, **caractérisée en ce que** les filés synthétiques (10,11) formant les fils de chaîne (10) et les fils de trame (11) du tissu satin ont une masse par unité de longueur de fil supérieure à 250 dtex (numéro métrique inférieur à Nm 40/1).

10. Bande adhésive à forte résistance à l'abrasion selon la revendication 9, **caractérisée en ce que** les filés synthétiques (10,11) formant les fils de chaîne (10) et les fils de trame (11) du tissu satin ont une masse par unité de longueur de fil de 500 dtex (numéro métrique de Nm 20/1, c'est-à-dire des filés de 450 deniers).

11. Bande adhésive à forte résistance à l'abrasion selon l'une quelconque des revendications 1 à 10, **caractérisée en ce que** le nombre de fils de chaîne (10) dans le tissu satin formant le substrat de type ruban (1) est compris entre 35 et 60 par cm, et est de préférence égal à 40 par cm.

12. Bande adhésive à forte résistance à l'abrasion selon l'une quelconque des revendications 1 à 11, **caractérisée en ce que** le nombre de fils de trame (11) dans le tissu satin formant le substrat de type ruban (1) est compris entre 10 et 25 par cm, de préférence entre 16 et 19 par cm.

13. Bande adhésive à forte résistance à l'abrasion selon l'une quelconque des revendications 1 à 12, **caractérisée en ce que** la couche adhésive (2) consiste en une couche d'acrylate d'alkyle sous forme copolymère.
